# EUROPÄISCHE PATENTSCHRIFT

(11) **EP 0 798 064 B1**
(45) Veröffentlichungstag und Bekanntmachung des Hinweises auf die Patenterteilung: **25.08.1999**
(21) Anmeldenummer: 97102614.1
(22) Anmeldetag: 19.02.1997
(51) Int. Cl.: B23B 31/26

(54) **Spannvorrichtung für scheibenförmige Werkzeuge**
Clamping device for disc like tools
Dispositif de serrage pour outils en forme de disque

(30) Priorität: 28.03.1996 DE 19612375
(43) Veröffentlichungstag der Anmeldung: 01.10.1997
(73) Patentinhaber: HOLZMA-MASCHINENBAU GmbH, 75365 Calw (DE)
(72) Erfinder: Heller, Heribert, 72218 Wildberg (DE); Reinauer, R., 72488 Sigmaringen-Laiz (DE)
(74) Vertreter: Dreiss, Fuhlendorf, Steimle & Becker, Patentanwälte

(56) Entgegenhaltungen:
- EP-A- 0 443 362
- FR-A- 1 421 894

## Beschreibung

Die Erfindung betrifft eine Vorrichtung zum Festspannen scheibenförmiger Werkzeuge, wie Kreissägeblätter, zwischen einem Festflansch und einem Losflansch einer Arbeitsspindel, mit den Merkmalen des Oberbegriffs von Anspruch 1.

Eine derartige Vorrichtung ist bereits bekannt (EP 0443362 A2).

Bei dieser Konstruktion ist die Arbeitsspindel auf einem stationären Lagerkörper gelagert. An seinem vom spindelförmigen Spannflansch abgekehrten Ende enthält der Lagerkörper einen zur Arbeitsspindel koaxialen Zylinderraum, in dem ein Kolben verschiebbar gelagert ist.

Eine mit dem Kolben verbundene Kolbenstange durchsetzt den Lagerkörper und ragt mit einem Befestigungskopf aus dem flanschseitigen Lagerkörperende heraus. Dieses Lagerkörperende dient zugleich zur Axialführung eines Aufnahmekörpers, auf dem Losflansch drehbar gelagert ist.

Der Aufnahmekörper ist einerseits im freien Ende des Lagerkörpers axial verschiebbar geführt und andererseits zur Durchführung eines Werkzeugwechsels mit dem Befestigungskopf der Kolbenstange durch eine geeignete Kupplung lösbar verbunden.

Der Losflansch wird an seiner dem spindelseitigen Festflansch zugekehrten Stirnseite von einem kurzen, zugleich das Werkzeug zentrierenden Zentrierkragen aufgenommen.

Der stationäre Lagerkörper der Arbeitsspindel enthält einen axialen, zylindrischen Aufnahmeraum, in welchem ein von der Kolbenstange durchsetzter Kraftspeicher in Form eines Tellerfederpaketes untergebracht ist. Dieses stützt Sich einerseits an einer Innenringschulter des Lagerkörpers und andererseits am Kolben ab und versucht somit, über die Kolbenstange und den Aufnahmekörper den Losflansch ständig am Werkzeug in Spannstellung zu halten, während durch Beaufschlagung des Kolbens der Losflansch zum Lösen vom Werkzeug wegbewegt wird.

Die relativ kurze Bemessung des Zentrierkragens der Arbeitsspindel zur Werkzeug- und Spannflanschzentrierung sowie derjenigen des Kolben-Axialweges lässt es hierbei nicht zu, rotierende Schneidwerkzeuge mit wesentlichen Unterschieden in ihrer Dicke auf der Arbeitsspindel festzuspannen.

Der Erfindung liegt deshalb die Aufgabe zugrunde, eine Vorrichtung mit den im Oberbegriff des Anspruches 1 erläuterten Merkmalen so zu verbessern, dass rotierende Schneidwerkzeuge in verschiedensten Dicken problemlos zum Einsatz gelangen können.

Diese Aufgabe wird durch die Merkmale des Anspruches 1 gelöst.

Bei der erfindungsgemässen Konstruktion ist der für das Spannen eines rotierenden Schneidwerkzeuges dienende, an dasselbe anzupressende Losflansch auf dem sowohl durch den Kraftspeicher als auch durch den Kolben in zueinander entgegengesetzten Axialrichtungen verschiebbaren Gegenglied axial stufenlos verstellbar, feststellbar und abnehmbar angeordnet. Demgemäss ermöglicht es die relative Verstellbarkeit von Losflansch und Gegenglied zueinander einen gewünschten gegenseitigen Abstand beider Spannflansche zueinander entsprechend gegebener Dicken von Schneidwerkzeugen wählen zu können, ohne dass dadurch die Wirkverbindung von Gegenglied und Kolben bzw. deren Axialweg zum Lösen des Losflansches verändert werden muss.

Die Anordnung des Widerlagers auf der Arbeitsspindel bietet hierbei den Vorteil einer Spindellagerung innerhalb eines Lagergehäuses.

Eine bevorzugte Anordnung des Losflansches auf dem Gegenglied ist Gegenstand des Anspruches 2, wobei eine Gewindeausbildung gemäss Anspruch 3 eine besonders intensive Flankenreibung zur Drehsicherung sowie ein schnelles Anlegen des Losflansches an ein Schneidwerkzeug ermöglicht. Die aufgrund der durch den Kraftspeicher erzeugten Anpresskraft erreichbare Drehblockierung des Losflansches auf dem Gegenglied lässt sich dabei durch Beaufschlagen des Kolbens sofort aufheben, so dass sich dann der Losflansch mit grosser Zuverlässigkeit manuell leicht vom Gegenglied abnehmen lässt.

In weiterer, günstiger Ausgestaltung der Erfindung sind Gegenglied und Widerlager gemäss den Ansprüchen 4 und 5 ausgebildet, wodurch sich funktionswesentliche Teile der Spannvorrichtung als raumsparende, im Losflansch unterzubringende Baueinheit zusammenfassen lassen.

Es ist denkbar, das Zylinderkolbenaggregat zum Entspannen des Losflansches unmittelbar auf das Gegenglied einwirken zu lassen. Hierzu konnte dieses Aggregat z.B. in der Arbeitsspindel untergebracht sein.

Eine wesentlich günstigere Konstruktion ergibt sich jedoch gemäss den Ansprüchen 6 bis 9.

Durch die Anordnung einer Kraftübersetzungsvorrichtung wird eine raumsparende Bauweise des Zylinderkolbenaggregats möglich, indem sich sowohl der Kolbendurchmesser als auch der Kolbenweg entsprechend klein wählen lässt.

Eine zu bevorzugende Anordnung des Zylinderkolbenaggregats ist hierbei Gegenstand des Anspruches 10, wobei sich dessen Versorgung mit Druckmedium gemäss Anspruch 11 günstig bewerkstelligen lässt.

Die auf den Losflansch einwirkende Anpresskraft lässt sich schliesslich gemäss Anspruch 12 vorteilhaft variieren.

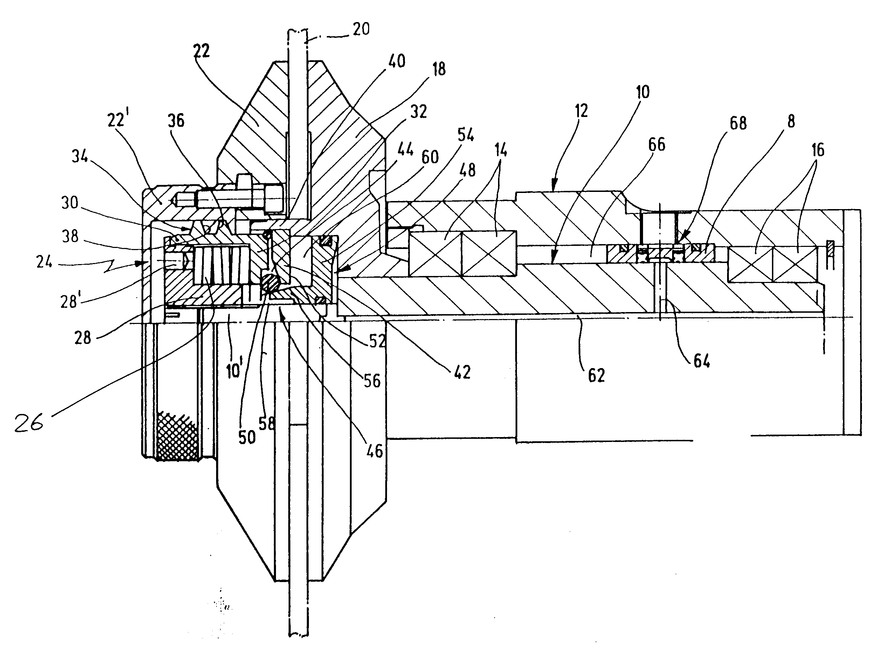

In der Zeichnung ist ein Ausführungsbeispiel einer im Halblängsschnitt dargestellten und mit einer erfindungsgemässen Spannvorrichtung ausgestatteten Arbeitsspindel gezeigt.

In der Zeichnung ist eine Arbeitsspindel 10 einer Werkzeugmaschine, beispielsweise einer Plattenaufteilsäge, dargestellt, die in einem Spindellagergehäuse 12 in Kugellagern 14, 16 antreibbar gelagert ist. Auf eine Darstellung der Antriebsmittel wurde verzichtet. Die Arbeitsspindel 10 trägt auf ihrem aus dem Spindellagergehäuse 12 herausragenden freien Spindelende 10' einen Festflansch 18 zur drehfesten Abstützung eines von der Arbeitsspindel 10 anzutreibenden, scheibenförmigen Schneidwerkzeuges, beispielsweise eines Kreissägeblattes 20, das strichpunktiert angedeutet ist.

Dem Festflansch 18 ist ein Losflansch 22 zugeordnet, der manuell auf das freie Spindelende 10' aufbringbar und an das Kreissägeblatt 20 anlegbar ist, bevor dasselbe durch eine Spannvorrichtung 24 an das Kreissägeblatt 20 angepresst wird.

Die Spannvorrichtung 24 ist auf dem freien Spindelende 10' derart angeordnet, dass ein wesentlicher Teil ihrer Komponenten bei auf das freie Spindelende 10' aufgebrachtem Losflansch 22 von einem kappenartigen, ein Griffstück 22' bildenden Teil desselben umschlossen ist.

Die Spannvorrichtung 24 weist zur Erzeugung der erforderlichen Flanschanpresskraft einen Kraftspeicher, vorzugsweise in Form eines zur Spindelachse koaxial angeordneten Tellerfederpaketes 26 auf, das sich einerseits an einem spindelfesten Widerlager, das vorzugsweise durch eine auf das freie Spindelende 10' aufgeschraubte Flanschbuchse 28 gebildet ist und andererseits an einem axial verschiebbaren Gegenglied 30 abstützt. Dasselbe bildet einen napfartig ausgebildeten Flanschträger, der mit seinem offenen Ende den Flansch 28' der Flanschbuchse 28 abgedichtet umschliesst, und an dessen Boden 32 sich das Tellerfederpaket 26 abstützt.

Auf dem napfartigen Flanschträger 30 ist der Losflansch 22 zum Anlegen an das Kreissägeblatt 20 manuell axial stufenlos verstellbar und feststellbar aufzubringen. Hierzu dient vorzugsweise ein doppelgängiges Trapezgewinde 34, das einerseits ein durch Aufschrauben schnell erreichbares Anlegen des Losflansches 22 an das Schneidwerkzeug 20 und andererseits eine zuverlässige Abstützung der vom Tellerfederpaket 26 erzeugten Axialspannkraft sowie dabei einen ebensolchen Reibschluss zwischen den ebenen Gewindeflanken von Innengewinde 36 des Flanschgriffstückes 22' und Aussengewinde 38 des den Flanschträger bildenden Gegengliedes 30 gewährleistet.

Wie aus der Zeichnung zu ersehen ist, greift das bodenseitige Ende des napfartigen Gegengliedes 30 in einen vom Festflansch 18 konzentrisch abragenden Zentrierkragen 40 für den Losflansch 22 ein, der einen Druckring 42 aufnimmt, der zusammen mit dem Boden 32 des Gegengliedes 30 einen sich radial nach aussen verengenden Zwischenraum 44 definiert. Zu diesem Zweck weist vorzugsweise der Druckring 42 einen konisch nach innen gerichteten Teil seiner Stirnfläche auf.

Dieser Druckring 42 bildet einen Bestandteil einer als Ganzes mit 46 bezeichneten Kraftübersetzungsvorrichtung zum Verlagern des Gegengliedes 30 entgegen der Anpresskraft des Tellerfederpaketes 26 und somit zur Flankenentlastung des Trapezgewindes 34. Der Losflansch 22 lässt sich dadurch genauso leicht vom Gegenglied 30 ab- wie auf dasselbe aufschrauben.

Zur Flankenentlastung des Trapezgewindes 34 genügt hierbei bereits ein Axialweg des Gegengliedes 30 von beispielsweise 0,2 mm. Dieser geringe Axialweg wird beispielsweise mittels mehrerer Stellglieder, vorzugsweise in Form von mit einem Zylinderkolbenaggregat 48 zusammenwirkenden Kugeln 50 erzielt. Diese Kugeln 50 greifen teilweise radial in den Zwischenraum 44 ein und ruhen auf einer sich in Richtung auf das freie Spindelende verjüngenden Konusfläche 52 eines durch einen von einem im Festflansch 18 geführten Kolben 54 des Zylinderkolbenaggregats 48 zentral abragenden, kragenförmigen Betätigungsgliedes 56 auf. Der Kolben 54 arbeitet gegen eine sich an der Flanschhülse 28 abstützende Rückstellfeder 58.

Das zur Kolbenbetätigung erforderliche Druckmedium wird dem Kolbenzylinder 60 über einen sich in der Arbeitsspindel 10 erstreckenden Axialkanal 62 zugeführt, der seinerseits über einen Radialkanal 64 mit einer an das Spindellagergehäuse 12 anschliessbaren, nicht dargestellten Druckquelle verbindbar ist. Innerhalb eines Ringraumes 66 zwischen Arbeitsspindel 10 und Spindellagergehäuse 12 ist eine sowohl mit der Druckquelle als auch dem Radialkanal 64 in Verbindung stehende Dichtvorrichtung 68 vorgesehen, die in bekannter Weise lediglich bei Zuführung des Druckmediums zur Aktivierung des Kolbens 54 die Arbeitsspindel 10 abdichtend umschliesst.

Die Anpresskraft des Tellerfederpaketes 26 lässt sich durch axiales Verlagern der Flanschbuchse 28 auf dem Spindelgewinde variieren.

Im Festflansch 18 kann an dessen das Schneidwerkzeug 20 abstützenden Stirnfläche ein Mitnehmerzapfen vorgesehen sein, der mit einer entsprechenden Werkzeugöffnung in Eingriff bringbar ist. Des weiteren kann der Losflansch 22 zweigeteilt ausgeführt sein in dem Sinne, dass dessen Griffstück 22' im übrigen Teil des Losflansches 22 verdrehbar gelagert ist, so dass zum Abnehmen des Losflansches 22 lediglich noch dessen Griffteil 22' relativ zum Gegenglied 30 zu verdrehen ist.

Die beschriebene Konstruktion ermöglicht es, in unterschiedlichen Dicken gehaltene Schneidwerkzeuge zwischen den Flanschen 18, 22 festzuspannen, indem der Losflansch 22 auf dem durch das Gegenglied 30 gebildeten Flanschträger über einen relativ grossen Bereich stufenlos axial verstellbar und feststellbar angeordnet ist, während dabei der axiale Spannweg des Flanschträgers 30 unverändert bleiben kann.

## Patentansprüche

1. Vorrichtung zum Festspannen scheibenförmiger Werkzeuge, wie Kreissägeblätter (20), zwischen einem Festflansch (18) und einem Losflansch (22) einer Arbeitsspindel (10) und mit einer Spannvorrichtung (24), die koaxial zur Spindelachse zwei Teile aufweist, von denen der eine Teil einen Kraftspeicher (26) bildet, der seinerseits an einem achsfesten Widerlager (28') und andererseits an einem relativ zur Arbeitsspindel (10) axial verschiebbaren Gegenglied (30) abgestützt ist, und der ständig versucht, den abnehmbaren Losflansch (22) an das zwischen beiden Flanschen (18, 22) zentriert aufgenommene Werkzeug (20) anzulegen, wobei der andere Teil der Spannvorrichtung (24) ein Zylinderkolbenaggregat (48) bildet, durch dessen Kolben (54) zum Lösen und Abnehmen des Losflansches (22) das Gegenglied (30) entgegen der Spannkraft des Kraftspeichers (26) verschiebbar ist,
**dadurch gekennzeichnet**,
dass das auf der Arbeitsspindel (10) angeordnete Widerlager (28') sowie der Kraftspeicher (26) nebst axial verschiebbarem Gegenglied (30) der Spannvorrichtung (24) innerhalb des auf dem Gegenglied (30) axial stufenlos verstellbar, feststellbar und abnehmbar angeordneten Losflansches (22) untergebracht sind.

2. Vorrichtung nach Anspruch 1, dadurch gekennzeichnet, dass der Losflansch (22) auf das Gegenglied (30) aufschraubbar ist.

3. Vorrichtung nach Anspruch 2, dadurch gekennzeichnet, dass das Schraubgewinde ein mehrgängiges Trapezgewinde (34) ist.

4. Vorrichtung nach einem der vorhergehenden Ansprüche, dadurch gekennzeichnet, dass das Gegenglied (30) als napfartiger Flanschträger ausgebildet ist, der sowohl einen das Widerlager bildenden Endflansch (28') der Arbeitsspindel (10) als auch den Kraftspeicher (26) in sich aufnimmt und bodenseitig mit dem Zylinderkolbenaggregat (48) in Wirkverbindung steht.

5. Vorrichtung nach einem der vorhergehenden Ansprüche, dadurch gekennzeichnet, dass der Kraftspeicher durch ein Tellerfederpaket (26) gebildet ist.

6. Vorrichtung nach einem der vorhergehenden Ansprüche, dadurch gekennzeichnet, dass zwischen dem Boden (32) des napfartigen Gegengliedes (30) und dem Zylinderkolbenaggregat (48) eine Kraftübersetzungsvorrichtung (46) zwischengeschaltet ist.

7. Vorrichtung nach Anspruch 6, dadurch gekennzeichnet, dass zumindest die Kraftübersetzungsvorrichtung (46) in einem vom Festflansch (18) koaxial abragenden Zentrierkragen (40) für den Losflansch (22) untergebracht ist.

8. Vorrichtung nach Anspruch 6 oder 7, dadurch gekennzeichnet, dass die Kraftübersetzungsvorrichtung (46) ein Betätigungsglied (56) mit einer gegen eine Rückstellfeder (58) auf der Arbeitsspindel (10) verschiebbar angeordneten und in Richtung auf das freie Spindelende geneigten Verstellfläche (52) aufweist, auf der wenigstens zwei einander diametral zugeordnete Stellglieder (50) aufruhen, die an der Bodenaussenseite des napfarigen Gegengliedes (30) anliegen und die durch die schräge Verstellfläche (52) des Betätigungsgliedes (56) bei dessen Verstellung in Richtung Spindelende in einen sich radial nach aussen verengenden Raum (44) hineinbewegbar sind.

9. Vorrichtung nach Anspruch 8, dadurch gekennzeichnet, dass dem Boden (32) des Gegengliedes (30) im Zentrierkragen (40) des spindelfesten Festflansches (18) ein die durch Kugeln (50) gebildeten Betätigungsglieder abstützender Druckring (42) koaxial zugeordnet ist.

10. Vorrichtung nach Anspruch 8 oder 9, dadurch gekennzeichnet, dass der Kolben (54) des Zylinderkolbenaggregates (48) innerhalb des Festflansches (18) angeordnet und mit dem Betätigungsglied (56) der Kraftübersetzungsvorrichtung (46) einstückig ist.

11. Vorrichtung nach Anspruch 10, dadurch gekennzeichnet, dass das Druckmedium für das Zylinderkolbenaggregat (48) über einen sich in der Arbeitsspindel (10) axial erstreckenden Kanal (62) zuführbar ist, der seinerseits über einen Radialkanal (64) mit einer an das Spindellagergehäuse (12) anschliessbaren Druckquelle verbindbar ist, wobei zwischen diesem und der Arbeitsspindel (10) eine mit dem Radialkanal (64) und dem Anschluss der Druckquelle in Verbindung stehende Dichtvorrichtung (68) zwischengeschaltet ist, die lediglich bei Druckbeaufschlagung des Zylinderkolbenaggregates (48) die Arbeitsspindel (10) abdichtend umschliesst.

12. Vorrichtung nach einem der vorhergehenden Ansprüche, dadurch gekennzeichnet, dass das achsfeste Widerlager durch eine Flanschbuchse (28, 28') gebildet ist, die auf das freie Spindelende (10') aufschraubbar ist.

## Claims

1. A device for clamping disc-shaped tools, such as circular saw blades (20), between a fixed flange (18) and a loose flange (22) of a work spindle (10), and having a clamping device (24) which has two parts which are coaxial with the spindle axis and of which the one part forms an energy store (26) which, for its part, is supported against an axially fixed abutment (28') and on the other hand against a counter member (30) which is axially displaceable with respect to the work spindle (10), which energy store continuously urges the removable loose flange (22) against the tool (20) which is received centred between both flanges (18, 22), the other part of the clamping device (24) forming a piston-and-cylinder unit (48) whereof the piston (54) may displace the counter member (30) in opposition to the clamping force of the energy store (26) in order to detach and remove the loose flange (22), characterized in that the abutment (28'), arranged on the work spindle (10), and the energy store (26) together with the axially displaceable counter member (30) of the clamping device (24) are accommodated within the loose flange (22), which is arranged on the counter member (30) such that it may be axially adjusted in continuously variable manner, fixed in position and removed.

2. A device according to Claim 1, characterized in that the loose flange (22) may be screwed onto the counter member (30).

3. A device according to Claim 2, characterized in that the screw thread is a multi-thread trapezoidal thread (34).

4. A device according to one of the preceding claims, characterized in that the counter member (30) is constructed as a cup-like flange support which receives inside it both an end flange (28'), forming the abutment, of the work spindle (10) and the energy store (26) and is in operative communication with the Piston-and-cylinder unit (48) at the base.

5. A device according to one of the preceding claims, characterized in that the energy store is formed by a disc-spring assembly (26).

6. A device according to one of the preceding claims, characterized in that an energy transmission device (46) is connected between the base (32) of the cup-like counter member (30) and the piston-and-cylinder unit (48).

7. A device according to Claim 6, characterized in that at least the energy transmission device (46) is accommodated in a centring collar (40), projecting coaxially from the fixed flange (18), for the loose flange (22).

8. A device according to Claim 6 or 7, characterized in that the energy transmission device (46) has an actuating member (56) having an adjusting face (52) which is arranged such that it may be displaced on the work spindle (10) in opposition to a resetting spring (58), is inclined in the direction of the free end of the spindle, and supports at least two mutually diametrically opposed actuating members (50) which abut against the outside of the base of the cup-like counter member (30) and may be moved into a radially outwardly narrowing space (44) by means of the oblique adjusting face (52) of the actuating member (56) when this latter is adjusted in the direction of the end of the spindle.

9. A device according to Claim 8, characterized in that a thrust ring (42), supporting the actuating members formed by balls (50), is coaxially associated with the base (32) of the counter member (30) in the centring collar (40) of the fixed flange (18) which is fixed to the spindle.

10. A device according to Claim 8 or 9, characterized in that the piston (54) of the piston-and-cylinder unit (48) is arranged within the fixed flange (18) and is in one piece with the actuating member (56) of the energy transmission device (46).

11. A device according to Claim 10, characterized in that the pressure medium for the piston-and-cylinder unit (48) may be supplied by way of a channel (62) which extends axially in the work spindle (10) and may, for its part, be connected by way of a radial channel (64) to a pressure source which may be attached to the spindle-bearing housing (12), there being connected between this latter and the work spindle (10) a sealing device (68) which is in communication with the radial channel (64) and the attachment for the pressure source and surrounds the work spindle (10) in sealing manner only when pressure is applied to the piston-and-cylinder unit (48).

12. A device according to one of the preceding claims, characterized in that the axially fixed abutment is formed by a flanged bush (28, 28') which may be screwed onto the free end (10') of the spindle.

## Revendications

1. Dispositif pour le blocage d'outils en forme de disque, tels que des lames de scie circulaire (20), entre une bride fixe (18) et une bride mobile (22) d'une broche de travail (10), comportant un dispositif de blocage (24) qui comporte deux parties coaxiales à la broche de travail, l'une des parties constituant un accumulateur de force (26), qui est en appui, d'une part, sur une butée (28') fixée sur l'axe et, d'autre part, sur un élément antagoniste (30) qui peut être déplacé axialement par rapport à la broche de travail (10) et qui tend, en permanence, à appliquer la bride mobile (22) amovible sur l'outil (20) qui est logé avec centrage entre les deux brides (18, 22), l'autre partie du dispositif de blocage (24) formant un bloc de piston du vérin (48) grâce au piston (54) duquel l'élément antagoniste (30) peut, pour la libération et l'enlévement de la bride mobile (22), être coulissé à l'encontre de la force de tension de l'accumulateur de force (26)
caractérisé en ce que
la butée (28') disposée sur la broche de travail (10) ainsi que l'accumulateur de force (26) avec l'élément antagoniste (30) à coulissement axial du dispositif de blocage (24) sont logés à l'intérieur de la bride mobile (22) qui est disposée sur l'élément antagoniste (30) de manière à pouvoir être réglée axialement de manière progressive, être bloquée et être enlevée.

2. Dispositif selon la revendication 1, caractérisé en ce que la bride mobile (22) peut être vissée sur l'élément antagoniste (30).

3. Dispositif selon la revendication 2, caractérisé en ce que le filetage est un filet trapézoïdal (34).

4. Dispositif selon l'une quelconque des revendications précédentes, caractérisé en ce que l'élément antagoniste (30) est réalisé sous la forme d'un support de bride en forme de coupelle qui reçoit aussi bien une bride terminale (28'), formant la butée, de la broche de travail (10) que l'accumulateur de force (26) et qui, du côté du fond, est en liaison active avec le bloc de piston du vérin (48).

5. Dispositif selon l'une quelconque des revendications précédentes, caractérisé en ce que l'accumulateur de force est constitué par un jeu de rondelles Belleville (26).

6. Dispositif selon l'une quelconque des revendications précédentes, caractérisé en ce que, entre le fond (32) de l'élément antagoniste (30) en forme de coupelle et le bloc de piston du vérin (48), est interposé un dispositif de transmission de force (46).

7. Dispositif selon la revendication 6, caractérisé en ce qu'au moins le dispositif de transmission de force (46) est logé dans une collerette de centrage (40) faisant saillie de manière coaxiale de la bride fixe (18) et destinée à la bride mobile (22).

8. Dispositif selon la revendication 6 ou 7, caractérisé en ce que le dispositif de transmission de force (46) comporte un élément de commande (56) présentant une surface de réglage (52) disposée sur la broche de travail (10) à l'encontre d'un ressort de rappel (58) et inclinée en direction de l'extrémité libre de la broche et sur laquelle reposent au moins deux éléments de réglage (50) qui sont disposés diamétralement l'un par rapport à l'autre, qui sont appliqués sur la face extérieure de fond de l'élément antagoniste (30) en forme de coupelle et qui, du fait de l'inclinaison de la surface de réglage (52) de l'élément de commande (56), peuvent être déplacés, lors du réglage de ce dernier, en direction de l'extrémité de la broche dans une chambre (44) se rétrécissant radialement vers l'extérieur.

9. Dispositif selon la revendication 8, caractérisé en ce qu'au fond (32) de l'élément antagoniste (30) est associé de manière coaxiale, dans la collerette de centrage (40) de la bride fixe (18) fixée sur la broche, un cône de serrage (42) en appui sur des éléments de commande constitués par des billes (50).

10. Dispositif selon la revendication 8 ou 9, caractérisé en ce que le piston (54) du bloc de piston du vérin (48) est disposé à l'intérieur de la bride fixe (18) et forme une seule pièce avec l'élément de commande (56) du dispositif de transmission de force (46).

11. Dispositif selon la revendication 10, caractérisé en ce que le fluide de pression destiné au bloc de piston du vérin (48) peut être amené par l'intermédiaire d'un canal (62) s étendant axialement dans la broche de travail (10) et qui, pour sa part, peut être relié, par l'intermédiaire d'un canal radial (64), à une source de pression, qui peut être raccordée au carter de palier de broche (12), dans lequel, entre ce dernier et la broche de travail, est interposé un dispositif d'étanchéité (68) qui est en liaison avec le canal radial (64) et le raccordement de la source de pression et qui renferme la broche de travail (10) de manière étanche seulement lors de l'application du fluide de pression du bloc de piston du vérin (48).

12. Dispositif selon l'une quelconque des revendications précédentes, caractérisé en ce que la butée fixée sur l'axe est constituée par une douille à bride (28, 28') qui peut être vissée sur l'extrémité libre (10') de la broche.
